# EUROPEAN PATENT APPLICATION

(11) **EP 1 933 563 A1**
(43) Date of publication of application: **18.06.2008**
(21) Application number: 06301255.3
(22) Date of filing: 14.12.2006
(51) Int. Cl.: H04N 7/26

(54) **Method and apparatus for encoding and/or decoding bit depth scalable video data using adaptive enhancement layer residual prediction**

(71) Applicant: Thomson Licensing, 92100 Boulogne-Billancourt (FR)
(72) Inventor: Wu, Yuwen, Xuanwu District, 100031 Beijing (CN); Gao, Yongying, Chaoyang District, 100101 Beijing (CN); Doser, Ingo, Burbank, CA 91504 (US)
(74) Representative: Hartnack, Wolfgang

(57) **Abstract**

A scalable video bitstream may have an H.264/AVC compatible base layer (BL) and a scalable enhancement layer (EL), where scalability refers to color bit depth. The SVC standard allows spatial inter-layer prediction, wherein a residual in the EL is generated which is then intra coded. Another spatial intra-coding mode for EL is pure intra coding (I_NxN). The invention discloses encoding modes wherein the output of enhancement layer decoding is an inter-layer residual. To get the final enhancement layer decoded sequence, the color bit depth inter-layer prediction version of the base layer, which is bit depth upsampled reconstructed base layer information, is added to the inter-layer residual which is decoded from the enhancement layer bit stream.

## Description

### Field of the invention

The invention relates to the technical field of digital video coding. It presents a coding solution for a novel type of scalability: bit depth scalability.

### Background

The video coding standard H.264/AVC provides various video coding modes and dynamic selection between them according to rate-distortion optimization (RDO). Its extension for Scalable Video Coding (SVC) provides different layers and supports for spatial scalability either direct encoding of the enhancement layer (EL), or inter-layer prediction. In direct encoding of the EL, a mode called I_NxN, redundancy between layers is not used: the EL is purely intra coded.

Inter-layer prediction is used in two coding modes, namely I_BL if the base layer (BL) is intra-coded, and residual prediction if the BL is inter-coded, so that BL and EL residuals are generated. With residual prediction, an EL residual is predicted from the BL residual.

For intra-coded EL macroblocks (MBs), the SVC supports two types of coding modes, namely original H.264/AVC I_NxN coding (spatial prediction, base_mode_flag=0) and I_BL, a special SVC coding mode for scalability where an EL MB is predicted from a collocated BL MB.

For inter-coding, the first step is generating BL and EL differential images called residuals. Residual inter-layer prediction is done for encoding the difference between the BL residual and the EL residual.

In recent years, higher color depth than the conventional eight bit color depth is more and more desirable in many fields, such as scientific imaging, digital cinema, high-quality-video-enabled computer games and professional studio and home theatre related applications. Accordingly, the state-of-the-art video coding standard H.264/AVC has included Fidelity Range Extensions (FRExt), which support up to 14 bits per sample and up to 4:4:4 chroma sampling.

For a scenario with two different decoders, or clients with different requests for the bit depth, e.g. 8 bit and 12 bit for the same raw video, the existing H.264/AVC solution is to encode the 12-bit raw video to generate a first bit-stream, and then convert the 12-bit raw video to an 8-bit raw video and encode it to generate a second bitstream. If the video shall be delivered to different clients who request different bit depths, it has to be delivered twice, e.g. the two bitstreams are put in one disk together. This is of low efficiency regarding both the compression ratio and the operational complexity.

The European Patent application EP06291041 discloses a scalable solution to encode the whole 12-bit raw video once to generate one bitstream that contains an H.264/AVC compatible BL and a scalable EL. Due to redundancy reduction, the overhead of the whole scalable bitstream on the above-mentioned first bitstream is small compared to the additional second bitstream. If an H.264/AVC decoder is available at the receiving end, only the BL sub-bitstream is decoded, and the decoded 8-bit video can be viewed on a conventional 8-bit display device; if a bit depth scalable decoder is available at the receiving end, both the BL and the EL sub-bitstreams may be decoded to obtain the 12-bit video, and it can be viewed on a high quality display device that supports color depths of more than eight bit.

### Summary of the Invention

The above-mentioned possibilities for redundancy reduction are not very flexible, considering that the efficiency of a particular encoding mode depends on the contents of the image. Different encoding modes may be optimized for different sequences. The efficiency of an encoding mode is higher if more redundancy can be reduced and the resulting bit-stream is smaller. The present invention provides a solution for this problem in the context of bit depth scalability.

Claim 1 discloses a method for encoding scalable video data that allows improved redundancy reduction and dynamic adaptive selection of the most efficient encoding mode. Claim 6 discloses a corresponding decoding method.

A corresponding apparatus for encoding is disclosed in claim 9, and a corresponding apparatus for decoding is disclosed in claim 10.

Three new SVC compatible coding modes of EL for CBDS are disclosed: one for intra coding and two for inter coding. According to one aspect of the invention, the EL signal to be encoded may be an inter-layer residual. It has been found that coding the inter-layer residual directly can be more effective for bit depth scalable coding. The new intra coding mode uses encoding of the residual between upsampled reconstructed BL and original EL (EL_{org}-BL_{rec,up}), wherein mode selection is used. In principle, the inter-layer residual is treated as N-bit video to replace the original N-bit EL video. Two possible modes are
1. a residual predicted from BL is just transformed, quantized and entropy coded, and
2. this residual is additionally intra-coded (I_NxN). Conventionally, the best mode for Intra MB was selected between I_BL mode and I_NxN mode of original EL N-bit video, using RDO. With the presented new Intra mode, the Intra MB best mode is selected between I_BL mode and I_NxN of N-bit inter-layer residual.

The new inter coding modes use prediction of EL from upsampled reconstructed BL (like the new intra mode) instead of the BL residual. Two possible inter coding modes (switched by a flag) are
1. the residual (EL_{org}-BL_{rec,up}) is encoded using Motion Estimation based on this residual; and
2. the residual (EL_{org}-BL_{rec, up}) is encoded using motion information from the BL, thereby omitting Motion Estimation on the EL.

According to one aspect of the invention, reconstructed BL information units (instead of original BL information units or BL residuals) are upsampled using bit depth upsampling, and the upsampled reconstructed BL information units are used to predict the collocated EL information units. This has the advantage that the prediction in the encoder is based on the same data that are available at the decoder.

Thus, the differential information or residual that is generated in the encoder matches better the difference between the bit-depth upsampled decoded BL image at the decoder and the original EL image, and therefore the reconstructed EL image at the decoder comes closer to the original EL image.

Information units may be of any granularity, e.g. units of single pixels, pixel blocks, MBs or groups thereof. Bit depth upsampling is a process that increases the number of values that each pixel can have. The value corresponds usually to the color intensity of the pixel. Thus, fine tuned color reproduction possibilities are enhanced, and gradual color differences of the original scene can be better encoded and decoded for being reproduced. Advantageously the video data rate can be reduced compared to current encoding methods.

An encoder according to the invention generates a residual from the original EL video data and bit depth upsampled reconstructed BL data, and the residual is entropy encoded and transmitted. The reconstructed BL information is upsampled at the encoder side and in the same manner at the decoder side, wherein the upsampling refers at least to bit depth.

The upsampling can be performed for intra coded as well as for inter coded images or MBs. However, different modes can be used for intra and inter coded images. Other than Intra coded images or I-frames, Inter coded images, also called P- or B-frames, need for their reconstruction other images, i.e. images with other picture order count (POC).

According to one aspect of the invention, the encoding of the inter-layer residual for the EL can be switched on or off, and if switched on it can be performed for I-slices only or also for B- and P-slices. Where inter-layer residual encoding is switched off, it can be replaced by other conventional encoding methods.

According to another aspect of the invention, an indication indicative of the used encoding mode is inserted in the encoded signal. In particular, the indication indicates whether the encoding of the inter-layer residual for the EL was switched on or off, and if switched on whether it was performed for I-slices only or also for B- and P-slices. Thus, the decoder can decode the signal correctly. The indication can be a single indication that can assume at least three values (1. no inter-layer residual, 2. only for I-slices and 3. for all slices), or it can be two different indications that each can assume at least two values.

The separate control for I- and B-/P-slices (i.e. for intra coded and inter coded slices) has the advantage that an encoding of inter-layer residual for I-slices does not change the single-loop decoding in the current SVC standard. However, to support encoding of the inter-layer residual for P-/B-slices, multi-loop decoding must be enabled, which has much higher computational complexity than the single-loop decoding. Therefore, separate control for the encoding of inter-layer residuals for I-slices and P-/B-slices provides an option that the encoder can select to support the encoding of inter-layer residual only for I-slices, as a trade-off between the coding efficiency and computational complexity.

According to one aspect of the invention, an encoder can select between at least two different intra coding modes for the EL: a first intra coding mode comprises generating a residual between the upsampled reconstructed BL and the original EL, and a second intra coding mode additionally comprises intra coding of this residual. In principle, the inter-layer residual is treated as higher bit depth video in the EL branch, replacing the conventional higher bit depth video. The residual or its intra coded version is then transformed, quantized and entropy coded. The best mode for intra MBs is conventionally selected between I_BL mode and I_NxN mode of original EL video, using RDO. With the disclosed new intra mode, the best intra MB mode is selected between I_BL mode and I_NxN of the high bit depth inter-layer residual, using RDO.

According to another aspect of the invention, the encoder can employ an Inter coding mode that comprises generating a residual between the bit depth upsampled reconstructed BL and the original EL. Further, the encoder may select for the EL between motion vectors that are upsampled from the BL and motion vectors that are generated based on said residual between the upsampled reconstructed BL and the original EL. Selection may be based on RDO of the encoded EL data.

According to one aspect of the invention, a method for encoding video data having a BL and an EL, wherein pixels of the BL have less bit depth than pixels of the enhancement layer, comprises steps of
determining for the BL whether it should be intra or inter coded,
encoding the BL according to the determined coding mode, transforming and quantizing the encoded BL data,
inverse transforming and inverse quantizing the transformed and quantized BL data, wherein reconstructed BL data are obtained,
upsampling the reconstructed BL data, wherein the upsampling refers at least to bit depth and wherein a predicted version of EL data is obtained,
generating a residual between original EL data and the predicted version of EL data,
selecting an encoding mode for the EL data,
encoding the EL data according to the selected encoding mode, wherein possible encoding modes comprise at least three modes, wherein a first mode comprises generating an inter-layer residual only if the BL is intra coded, a second mode comprises generating an inter-layer residual for all cases and a third mode comprises not generating an inter-layer residual,
transforming and quantizing the encoded EL data,
entropy encoding the transformed and quantized encoded BL data,
entropy encoding the transformed and quantized EL data, and
adding one or more indications indicative of the selected encoding mode for the EL data to the entropy coded BL and/or EL data.

In principle, the steps relating to generating the inter-layer residual need not be executed for the third mode, where no inter-layer residual is used.

In one embodiment, two separate indications are used. One indication specifies whether the encoded EL signal is an inter-layer residual at least for I-slices, and the second indication specifies whether the encoded EL signal is an inter-layer residual also for B- and P-slices. Preferably, inter-layer residuals for B- and P-slices are only used if they are also used for I-slices. In this case, the second indication is only used if the first indication indicates usage of inter-layer residuals.

According to one aspect of the invention, the method for encoding further comprises the step of selecting for the case of intra coded EL data between at least two different intra coding modes, wherein at least one but not all of the intra coding modes comprises additional intra coding of said residual between original EL data and the predicted version of EL data.

Advantageously, the two mentioned encoder embodiments can be combined into a combined encoder that can adaptively encode intra- and inter-encoded video data, using means for detecting whether encoded video data are Inter or Intra coded (e.g. according to an indication).

According to one aspect of the invention, a method for decoding scalable video data having a BL and an EL, wherein pixels of the BL have less bit depth than pixels of the enhancement layer, comprises the steps of
receiving quantized and (e.g. DCT-) transformed enhancement layer information and base layer information and a decoding mode indication,
performing inverse quantization and inverse transformation on the received EL and BL information,
upsampling inverse quantized and inverse transformed BL information, wherein the bit depth per value is increased and wherein predicted EL information is obtained, and
reconstructing from the predicted EL information and the inverse quantized and inverse transformed EL information reconstructed EL video information, wherein a decoding mode according to said decoding mode indication is selected, wherein for a first decoding mode the reconstructed EL video information is obtained by combining said predicted EL information with the inverse quantized and inverse transformed EL information only in the case of intra coded slices, for a second decoding mode the reconstructed EL video information is obtained by combining said predicted EL information with the inverse quantized and inverse transformed EL information in all cases, independent from whether the slice is intra coded or inter coded, and for a third decoding mode the reconstructed EL video information is obtained without using said predicted EL information. Further sub-modes are possible.

According to one aspect of the invention, the method for decoding is further specified in that possible decoding modes further comprise a fourth mode, wherein in the case of intra coded EL information the inverse quantized and
inverse transformed EL information is intra decoded (using I_NxN decoding) to obtain said EL residual.

Advantageously, the two mentioned decoder embodiments can be combined into a combined decoder that can adaptively decode intra- and inter-encoded video data.

According to another aspect of the invention, an encoded scalable video signal comprises encoded BL data, encoded EL data and a prediction type indication, wherein the prediction type indication indicates whether the encoded EL data comprises a residual being the difference between a bit depth upsampled BL image and an EL image, the residual comprising differential bit depth information, and further indicates whether said residual was obtained from intra coded BL video only, or also from inter coded BL video.

In one embodiment, the prediction type indication further indicates whether or not the decoder must perform spatial intra decoding on the EL data. In a further embodiment, the prediction type indication further indicates the prediction order between spatial and bit depth prediction.

According to another aspect of the invention, an apparatus for encoding video data having a base layer and an enhancement layer, wherein the base layer has lower color resolution and lower spatial resolution than the enhancement layer, comprises
means for determining for the base layer whether it should be intra or inter coded,
means for encoding the base layer according to the determined coding mode,
means for transforming and means for quantizing base layer data,
means for inverse transforming and means for inverse quantizing the transformed and quantized base layer data, wherein reconstructed base layer data are obtained,
means for selecting an encoding mode for the enhancement layer data, wherein possible encoding modes comprise at least three modes, wherein a first mode comprises generating an inter-layer residual only if the base layer is intra coded, a second mode comprises generating an inter-layer residual for all cases and a third mode comprises not generating an inter-layer residual,
means for upsampling the reconstructed base layer data if the first mode or the second mode was selected, wherein the upsampling refers at least to bit depth and wherein a predicted version of enhancement layer data is obtained, means for generating a residual between original enhancement layer data and the predicted version of enhancement layer data if the first mode or the second mode was selected,
means for encoding the enhancement layer data according to the selected encoding mode, wherein for the first or second encoding mode said residual is encoded,
means for transforming and quantizing the encoded enhancement layer data,
means for entropy encoding the transformed and quantized encoded base layer data,
means for entropy encoding the transformed and quantized enhancement layer data, and
means for adding one or more indications indicative of the selected encoding mode for the enhancement layer data to the entropy coded base layer and/or enhancement layer data.

According to another aspect of the invention, an apparatus for decoding video data having a BL and an EL, wherein the BL has lower color resolution and lower spatial resolution than the EL, comprises
means for receiving quantized and transformed enhancement layer information and base layer information and a decoding mode indication,
means for performing inverse quantization and inverse transformation on the received enhancement layer and BL information,
means for upsampling inverse quantized and inverse transformed BL information, wherein the bit depth per value is increased and wherein predicted enhancement layer information is obtained, and
means for reconstructing from the predicted enhancement layer information and the inverse quantized and inverse transformed enhancement layer information reconstructed EL video information, wherein a decoding mode according to said decoding mode indication is selected, wherein
for a first decoding mode the reconstructed enhancement layer video information is obtained by means for combining said predicted enhancement layer information with the inverse quantized and inverse transformed enhancement layer information only in the case of intra coded slices,
for a second decoding mode the reconstructed enhancement layer video information is obtained by means for combining said predicted enhancement layer information with the inverse quantized and inverse transformed enhancement layer information in all cases, and
for a third decoding mode the reconstructed enhancement layer video information is obtained without using said predicted enhancement layer information.

Various embodiments of the presented coding solution are compatible to H.264/AVC and all kinds of scalability that are currently defined in H.264/AVC scalable extension (SVC.) .

Advantageous embodiments of the invention are disclosed in the dependent claims, the following description and the figures.

### Brief description of the drawings

Exemplary embodiments of the invention are described with reference to the accompanying drawings, which show in
Fig.1 a framework of color bit depth scalable coding;
Fig.2 an encoder framework of a new Intra coding mode for bit depth scalable enhancement layer;
Fig.3 an encoder framework of two new Inter coding modes for bit depth scalable enhancement layer;
Fig.4 a decoder framework of two new Inter coding modes for bit depth scalable enhancement layer;
Fig.5 a decoder framework of the new Intra coding mode for bit depth scalable enhancement layer; and
Fig.6 the structure of an encoder that is capable of using different residual encoding modes selectively.

### Detailed description of the invention

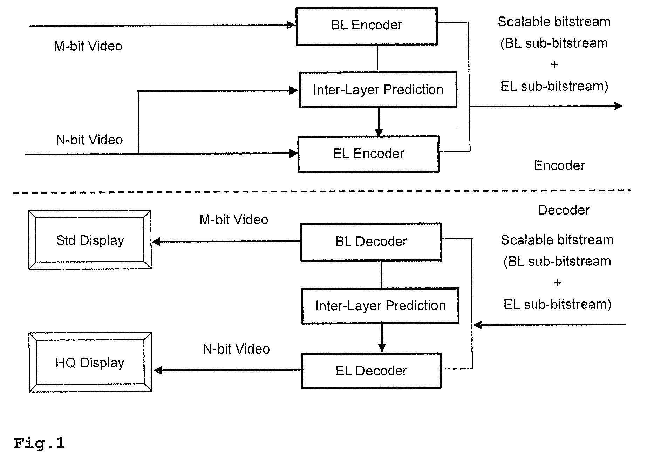

As shown in Fig.1, two videos are used as input to the video encoder: N-bit raw video and M-bit (M<N, usually M=8) video. The M-bit video can be either decomposed from the N-bit raw video or given by other ways. The scalable solution can reduce the redundancy between two layers by using pictures of the BL. The two video streams, one with 8-bit color and the other with N-bit color (N>8), are input to the encoder, and the output is a scalable bit-stream. It is also possible that only one N-bit color data stream is input, from which an M-bit (M<N) color data stream is internally generated for the BL. The M-bit video is encoded as the BL using the included H.264/AVC encoder. The information of the BL can be used to improve the coding efficiency of the EL. This is called *inter-layer prediction* herein. Each picture - a group of MBs - has two access units, one for the BL and the other one for the EL. The coded bitstreams are multiplexed to form a scalable bitstream. The BL encoder comprises e.g. an H.264/AVC encoder, and the reconstruction is used to predict the N-bit color video, which will be used for the EL encoding.

As shown in Fig 1, the scalable bit-stream exemplarily contains an AVC compliant BL bit-stream, which can be decoded by a BL decoder (conventional AVC decoder). Then the same prediction as in the encoder will be done at the decoder side (after evaluation of a respective indication) to get the predicted N-bit video. With the N-bit predicted video, the EL decoder will then use the N-bit prediction to generate the final N-bit video for a High Quality display HQ.

In the following, when the term color bit depth is used it means bit depth, i.e. the number of bits per value. This is usually corresponding to color intensity.

In one embodiment, the present invention is based on the current structure of SVC spatial, temporal and quality scalability, and is enhanced by bit depth scalability for enhanced color bit depth. Hence, this embodiment is completely compatible to the current SVC standard. However, it will be easy for the skilled person to adapt it to other standards.

The key differences between original coding modes and the new inter-layer residual coding modes is that the output of EL decoding is an inter-layer residual. In other words, to get the final enhancement layer decoded sequence, the color bit depth inter-layer prediction (i.e. bit depth upsampled) version of the base layer video must be added to the inter-layer residual that is decoded from the bit stream by the EL decoder.

To signal this kind of difference to the decoder, new syntax elements are inserted in bit stream to help the decoder's understanding. In particular, for the SVC example, two new syntax elements are added to the slice header SVC extension syntax (slice_header_in_scalable_extension( )) to support the new inter-layer residual coding modes: bit_ depth base_id_plus1 and bit_depth_residual_inter_coding_flag, as shown in Tab.1 in lines 40-43.

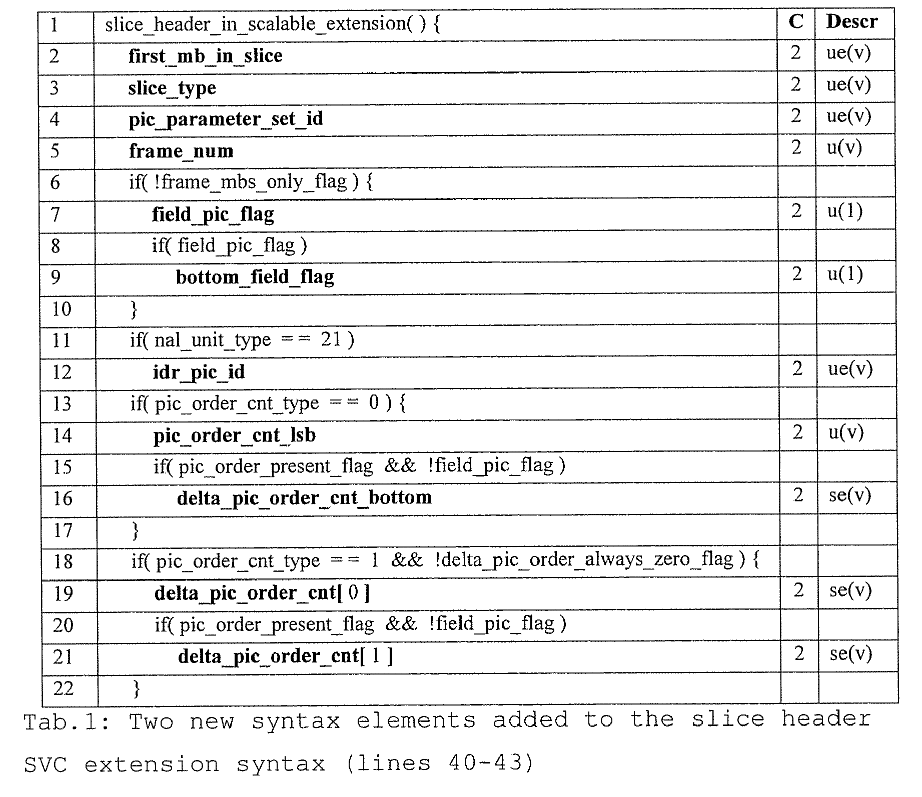

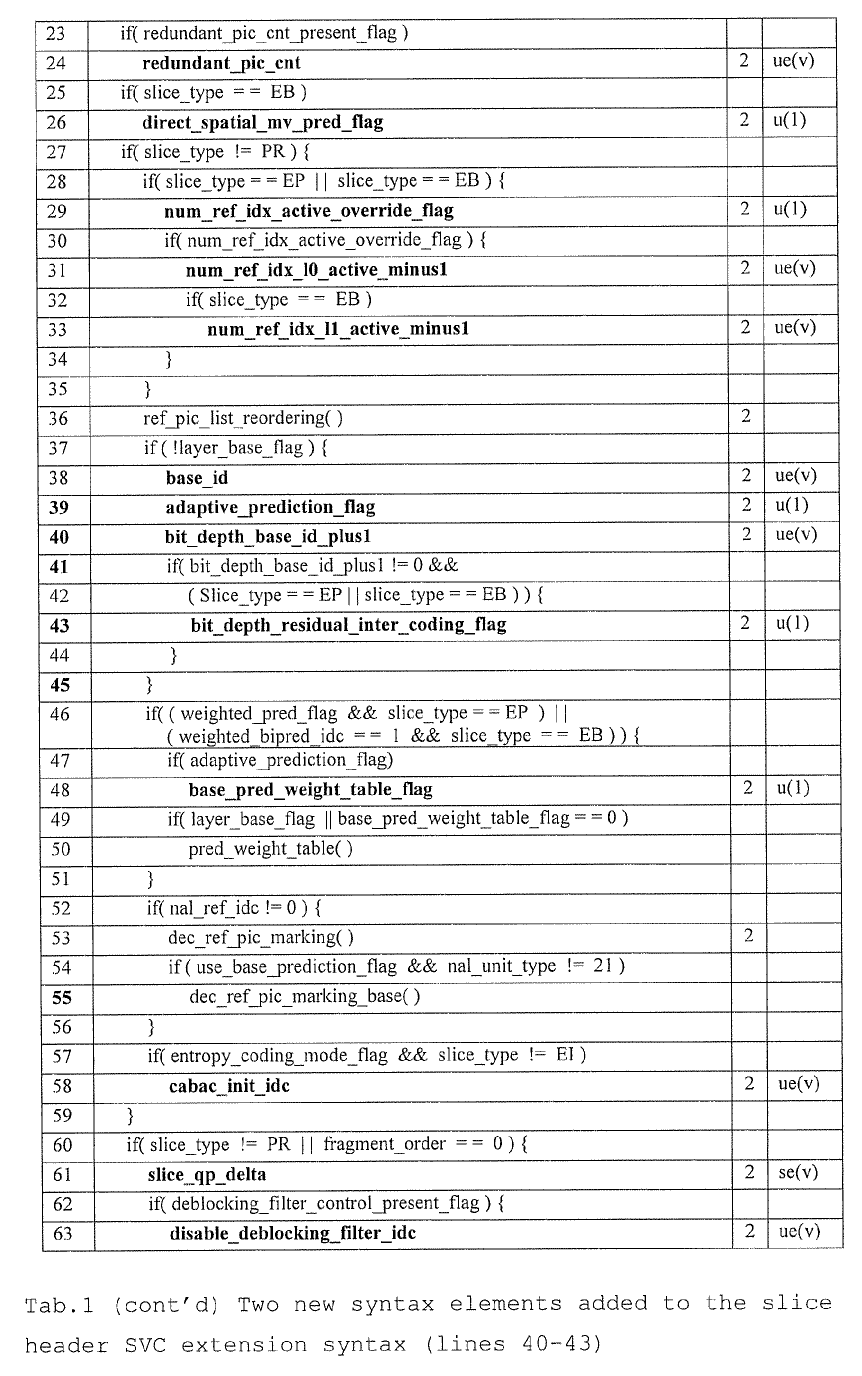

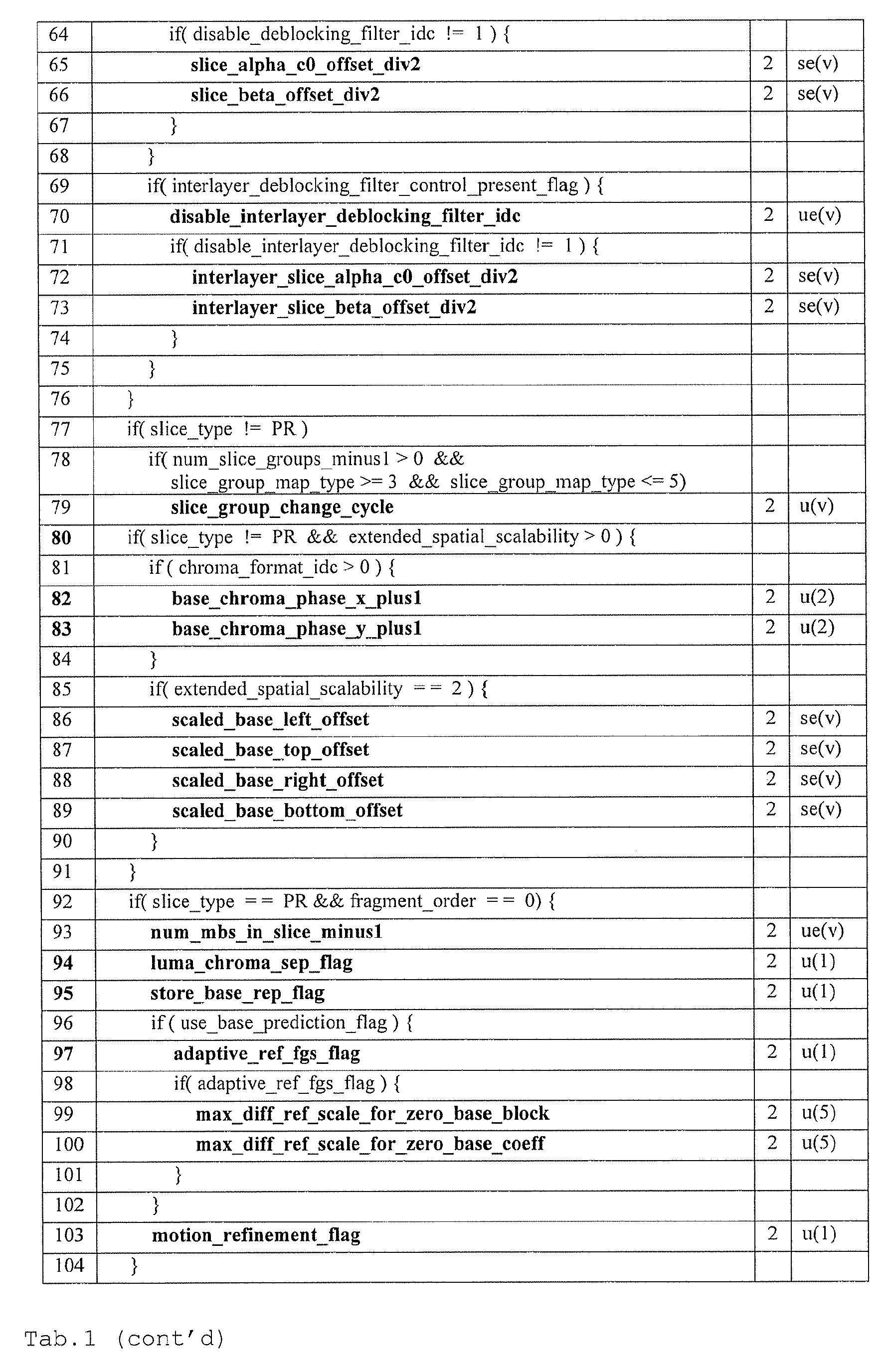

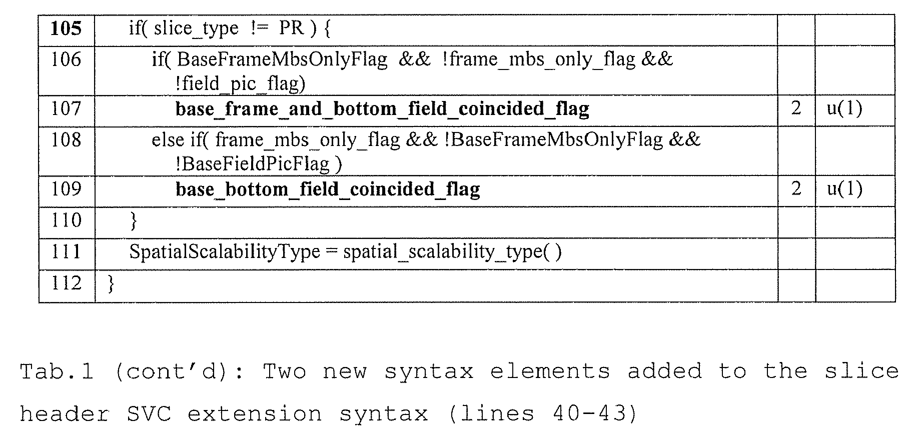

In this embodiment, one flag *bit_depth_base_id_plus1* specifies whether the encoded signal is inter-layer residual or not.
E.g. *bit_depth_base_id_plus1* = 0 specifies that the encoded signal is not inter-layer residual in the current slice (this may be default), and *bit_depth_base_id_plus1* > 0 specifies that the encoded signal is inter-layer residual if the current slice is an I-slice, i.e. intra coded.

The other flag is *bit_depth_residual_inter_coding_flag. bit_depth_residual_inter_coding_flag* = 0 specifies that the encoded signal is no inter-layer residual if the current slice is a P- or B-slice (default). *bit_depth_residual_inter_coding_flag* = 1 specifies that the encoded signal is an inter-layer residual if the current slice is a P- or B-slice.

Only when *bit_depth_base_id_plus1* > 0, the process of bit depth inter-layer prediction is invoked.

In other words, the value of *bit-depth_base_id_plus1* specifies the base pictures that are used for bit depth inter-layer prediction of the current slice. Therefore, it can have other values than 0 or 1.

In one embodiment, encoding of inter-layer residuals for P- and B-slices is only used if the corresponding I-slices encode the inter-layer residual. This rule better matches the nature of the SVC decoding process. However, it is an advantage to have separate control on the encoding of inter-layer residual for I-slices and P-/B-slices. The reason is that enabling encoding of inter-layer residual for I-slices does not change the single-loop decoding that is used in the current SVC standard. However, to support encoding of inter-layer residual for P-/B-slices, multi-loop decoding must be enabled, which has much higher computational complexity than the single-loop decoding. Therefore, the separate control on the encoding of inter-layer residual for I-slices and P-/B-slices provides an option that the encoder can select to support the encoding of inter-layer residual only for I-slices, as a trade-off between the coding efficiency and computational complexity.

In one embodiment of the invention three new types of encoding mode can be used, which are all based on bit depth prediction for bit depth scalability. These new coding modes were designed to solve the problem of how to more efficiently and more flexibly encode the inter-layer residual. Current SVC standard only supports encoding the inter-layer residual at I_BL mode, without any prediction mode selection. For Inter coding, the current SVC standard does not support directly encoding the inter-layer residual. Instead, residual inter-layer prediction is done for encoding the difference between the BL residual and the EL residual. In other words, the input to the inter-layer prediction module is the residual of BL in Inter coding, but not the reconstructed BL that is used herein. From the disclosed three new coding modes, one refers to Intra coding and the other two to Inter coding, for encoding the inter-layer residual based on H.264/AVC.

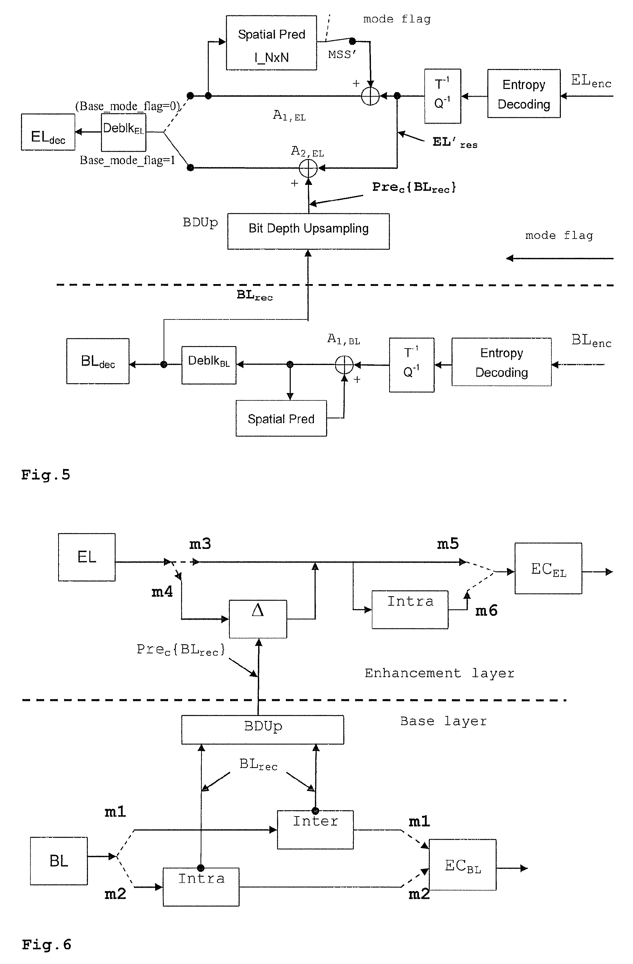

The different possibilities for encoding are shown in Fig.6. In one mode m3 the EL is encoded without inter-layer prediction. In another mode m4 an inter-layer prediction is used. The BL, whether it is intra coded m1 or inter coded m2, is reconstructed and bit depth upsampled to predict the EL in a residual generator Δ which is in principle a differentiator. In one mode m5 the residual is directly entropy coded, while in another mode m6 it is additionally spatially intra coded.

### Intra Coding Mode

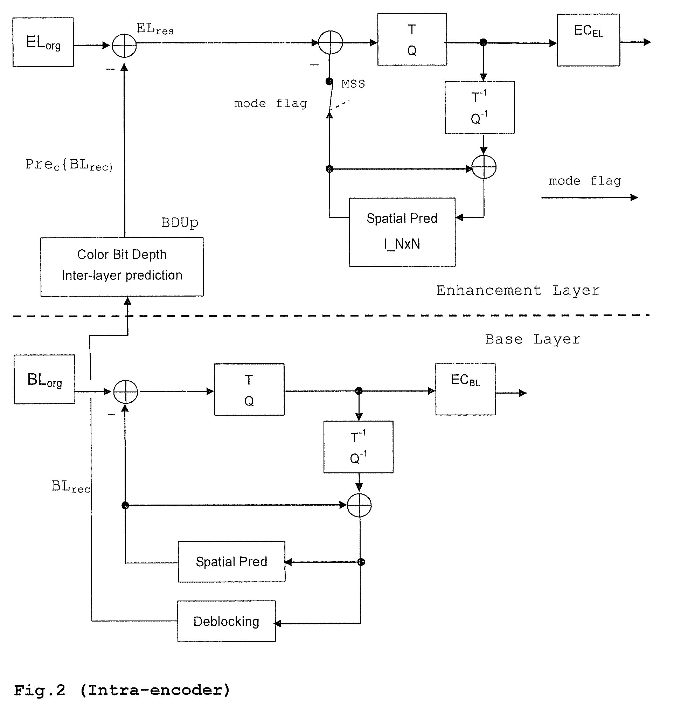

The current SVC standard supports two types of coding modes for enhancement layer Intra MB, one is original H.264/AVC I_NxN coding mode, and the other one is an SVC special coding mode I_BL. In current SVC, I_NxN mode encodes the original EL N-bits video while I_BL mode codes the inter-layer residual directly without prediction mode selection. The present invention adds a new mode for coding Intra MBs, by treating the inter-layer residual as N-bit video and replacing the original N-bit video with the inter-layer residual. With the presented new Intra mode, the Intra MB best mode is selected between I_BL mode and I_NxN encoded version of the N-bit inter-layer residual. A framework of Intra coding for a color bit depth scalable codec with this Intra coding mode is shown in Fig.2.

Depending on a mode selection switch MSS, the EL residual is or is not I_NxN encoded before it is transformed T, quantized Q and entropy coded EC_{EL}. The encoder has means for deciding the encoding mode based on RDO, which provides a control signal EL_intra_flag that is also output for correspondingly controlling the decoder. For this purpose the means for deciding can actually perform the encoding, or only analyze the input image data according to defined parameter, e.g. color or texture smoothness.

A corresponding decoder is shown in Fig.5. It detects in its input data said indications, and in response to the indications sets MCC' the corresponding decoding mode. For one value of the indication, the inverse quantized and inverse transformed EL residual EL'ᵣₑₛ will be used as it is for decoding, while for another value of the indication spatial prediction will be performed before. The indication can be contained e.g. in slice header information and be valid for a complete slice.

### Inter Coding Mode

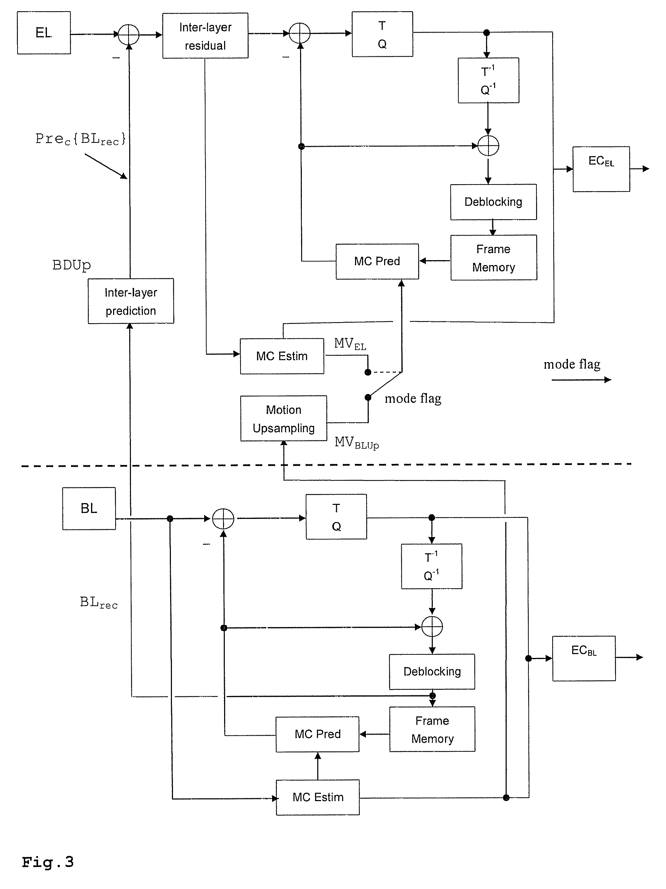

For Inter coding, the current SVC standard does not support the inter-layer prediction using the reconstructed base layer picture, but supports the inter-layer prediction based on the base layer residual, that is the difference between the original BL M-bit video and the reconstructed M-bit counterpart generated by the BL encoder. By utilizing the new Inter coding mode for the EL, the inter-layer prediction is done using the reconstructed and upsampled M-bit BL information Pre_{c}{BL_{rec}}, as shown in Fig.3. In the EL branch of the encoder, this inter-layer residual is encoded using one of the at least two encoding modes.

The first new EL Inter coding mode comprises encoding the inter-layer residual MB instead of encoding the EL original N-bit MB, with the motion vectors MV_{EL} obtained by motion estimation (ME) from the EL data, and in particular from the current and previous EL residuals.

In the second EL Inter coding mode, the motion vectors for the EL are shared from the BL. ME and motion compensation (MC) are computationally complex, therefore this encoding method saves much processing power in the EL encoder. By sharing the BL motion vectors, both the running time of the encoder and the generated bitrate can be reduced. The BL motion data are upsampled MV_{BLUp} and are used for the BL MC MCPred in this mode.

A flag mode_flag is the switch between the two new EL Inter coding modes, which flag is also output together with the encoded BL and EL data for correspondingly controlling the decoder.

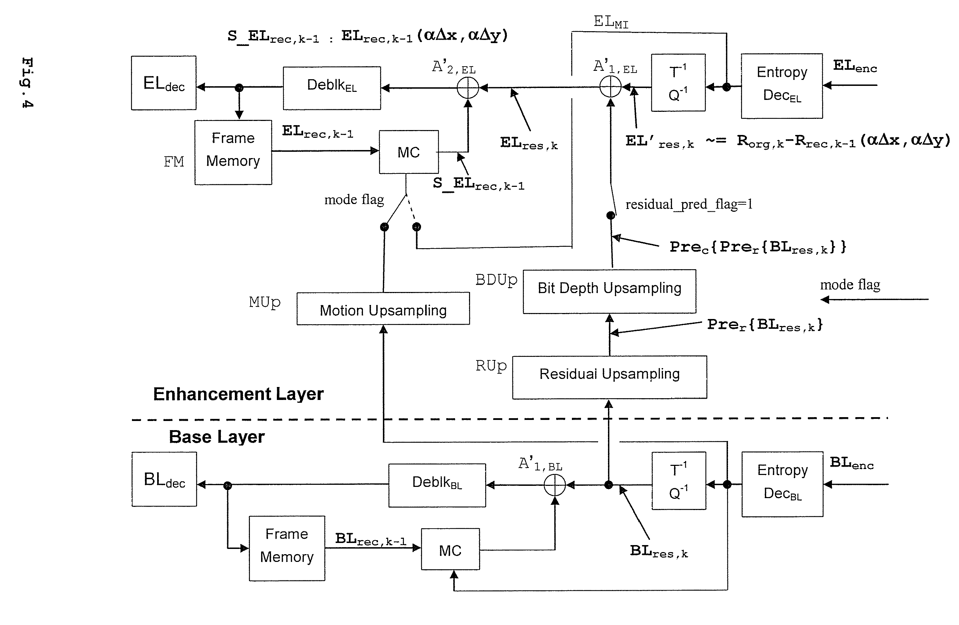

A corresponding decoder is shown in Fig.4. In the particular embodiment of Fig.4 the BL residual is in addition spatially upsampled, using residual upsampling RUp before it is bit depth upsampled BDUp. A flag mode_flag is detected in the incoming data stream and used to control the decoding mode: if the flag has a first value, motion information extracted from the incoming EL data stream EL_{MI} is used for the EL branch. If the flag has another second value, upsampled MUp motion information from the BL, which was extracted from the incoming data BL stream and then upsampled, is used for the EL branch. Other parts (image data) of the incoming BL data stream are inverse quantized and inverse transformed and the resulting residual BL_{res,k} is used to construct the BL video (if required) and for upsampling (if EL video is required). In principle it is sufficient if the scalable decoder generates either BL video or EL video, depending on the requirements defined by a user.

Two main advantages of the presented new coding modes of EL for color bit depth scalable coding are: first, the new coding modes provide more mode options for the encoder, which is especially useful for RDO, since RDO has more choices then, and better optimization is possible. Secondly, with these new modes the inter-layer residual is encoded directly, and higher coding efficiency is achieved.

Thus, the invention can be used for scalable encoders, scalable decoders and scalable signals, particularly for video signals or other types of signals that have different quality layers and high inter-layer redundancy.

It will be understood that the present invention has been described purely by way of example, and modifications of detail can be made without departing from the scope of the invention. Each feature disclosed in the description and (where appropriate) the claims and drawings may be provided independently or in any appropriate combination. Features may (where appropriate) be implemented in hardware, software, or a combination of the two. Reference numerals appearing in the claims are by way of illustration only and shall have no limiting effect on the scope of the claims.

## Claims

1. Method for encoding video data having a base layer and an enhancement layer, wherein the base layer has lower color resolution than the enhancement layer, the method comprising the steps of
- determining for the base layer whether it should be intra or inter coded;
- encoding (D_{BL}) the base layer according to the determined coding mode;
- transforming (T) and quantizing (Q) the encoded base layer data;
- inverse transforming (T⁻¹) and inverse quantizing (Q⁻¹) the transformed and quantized base layer data, wherein reconstructed BL data (BL_{rec}) are obtained;
- selecting an encoding mode for the enhancement layer data, wherein possible encoding modes comprise at least three modes, wherein a first mode comprises generating an inter-layer residual only if the base layer is intra coded, a second mode comprises generating an inter-layer residual for all cases and a third mode comprises not generating an inter-layer residual;
- if the first mode or the second mode was selected, performing the steps of
- upsampling (BDUp) the reconstructed base layer data (BL_{rec}), wherein the upsampling refers at least to bit depth and wherein a predicted version of enhancement layer data (Pre_{c}{Preₜ{BL_{rec}}}) is obtained;
- generating a residual (EL'ᵣₑₛ) between original enhancement layer data and the predicted version of enhancement layer data (Pre_{c}{Preₜ{BL_{rec}}});
- encoding the enhancement layer data according to the selected encoding mode, wherein for the first or second encoding mode said residual (EL'ᵣₑₛ) is encoded;
- transforming (T) and quantizing (Q) the encoded enhancement layer data;
- entropy encoding (EC_{BL}) the transformed and quantized encoded base layer data;
- entropy encoding (EC_{EL}) the transformed and quantized enhancement layer data; and
- adding one or more indications indicative of the selected encoding mode for the enhancement layer data to the entropy coded base layer and/or enhancement layer data.

2. Method according to claim 1, wherein a first and a second indication are used, the first indication specifying if the encoded enhancement layer signal is an inter-layer residual at least for intra coded slices, and the second indication specifying if the encoded enhancement layer signal is an inter-layer residual also for inter coded slices.

3. Method according to claim 2, wherein inter-layer residuals for inter coded slices are only used if they are also used for intra coded slices.

4. Method according to one of the claims 1-3, further comprising the step of selecting for the case of intra coded enhancement layer between at least two different intra coding modes, wherein at least one but not all of the intra coding modes comprises additional intra coding of said residual (ELᵣₑₛ).

5. Method according to one of the claims 1-4, wherein the step of upsampling also comprises spatial upsampling (TUp).

6. Method for decoding scalable video data having a base layer and an enhancement layer, wherein the base layer has less bit depth than the enhancement layer, comprising the steps of
- receiving quantized and transformed enhancement layer information and base layer information and a decoding mode indication;
- performing inverse quantization and inverse transformation on the received enhancement layer and BL information;
- upsampling inverse quantized and inverse transformed BL information, wherein the bit depth per value is increased and wherein predicted enhancement layer information is obtained; and
- reconstructing from the predicted enhancement layer information and the inverse quantized and inverse transformed enhancement layer information reconstructed EL video information, wherein a decoding mode according to said decoding mode indication is selected, wherein
for a first decoding mode the reconstructed enhancement layer video information is obtained by combining said predicted enhancement layer information with the inverse quantized and inverse transformed enhancement layer information only in the case of intra coded slices,
for a second decoding mode the reconstructed enhancement layer video information is obtained by combining said predicted enhancement layer information with the inverse quantized and inverse transformed enhancement layer information in all cases, and
for a third decoding mode the reconstructed enhancement layer video information is obtained without using said predicted enhancement layer information.

7. Method according to the claim 6, wherein a reconstructed enhancement layer residual (EL_{res,k}) is obtained, further comprising the step of adding (A'_{2,EL)} the reconstructed enhancement layer residual to reconstructed, motion compensated enhancement layer information (S_EL_{rec, k-1}).

8. Method according to claim 6, wherein possible decoding modes further comprise
- a third mode, wherein in the case of intra coded enhancement layer information the inverse quantized and inverse transformed enhancement layer information results in an enhancement layer residual; and
- a fourth mode, wherein in the case of intra coded enhancement layer information the inverse quantized and inverse transformed enhancement layer information is intra decoded to obtain said enhancement layer residual.

9. Apparatus for encoding video data having a base layer and an enhancement layer, wherein the base layer has lower color resolution than the enhancement layer, comprising
- means for determining for the base layer whether it should be intra or inter coded;
- means for encoding (D_{BL}) the base layer according to the determined coding mode;
- means for transforming (T) and means for quantizing (Q) base layer data;
- means for inverse transforming (T⁻¹) and means for inverse quantizing (Q⁻¹) the transformed and quantized base layer data, wherein reconstructed base layer data (BL_{rec}) are obtained;
- means for selecting an encoding mode for the enhancement layer data, wherein possible encoding modes comprise at least three modes, wherein a first mode comprises generating an inter-layer residual only if the base layer is intra coded, a second mode comprises generating an inter-layer residual for all cases and a third mode comprises not generating an inter-layer residual;
- means for upsampling (BDUp) the reconstructed base layer data (BL_{rec}) if the first mode or the second mode was selected, wherein the upsampling refers at least to bit depth and wherein a predicted version of enhancement layer data (Pre_{c}{Preₜ{BL_{rec}}}) is obtained;
- means for generating a residual (EL'ᵣₑₛ) between original enhancement layer data and the predicted version of enhancement layer data (Pre_{c}(Preₜ{BL_{rec}}}) if the first mode or the second mode was selected;
- means for encoding the enhancement layer data according to the selected encoding mode, wherein for the first or second encoding mode said residual (EL'ᵣₑₛ) is encoded;
- means for transforming (T) and quantizing (Q) the encoded enhancement layer data;
- means for entropy encoding (EC_{BL}) the transformed and quantized encoded base layer data;
- means for entropy encoding (EC_{EL}) the transformed and quantized enhancement layer data; and
- means for adding one or more indications indicative of the selected encoding mode for the enhancement layer data to the entropy coded base layer and/or enhancement layer data.

10. Apparatus for decoding video data having a base layer and an enhancement layer, wherein the base layer has lower color resolution than the enhancement layer, comprising
- means for receiving quantized and transformed enhancement layer information and base layer information and a decoding mode indication;
- means for performing inverse quantization and inverse transformation on the received enhancement layer and BL information;
- means for upsampling inverse quantized and inverse transformed BL information, wherein the bit depth per value is increased and wherein predicted enhancement layer information is obtained; and
- means for reconstructing from the predicted enhancement layer information and the inverse quantized and inverse transformed enhancement layer information reconstructed EL video information, wherein a decoding mode according to said decoding mode indication is selected, wherein for a first decoding mode the reconstructed enhancement layer video information is obtained by means for combining said predicted enhancement layer information with the inverse quantized and inverse transformed enhancement layer information only in the case of intra coded slices,
for a second decoding mode the reconstructed enhancement layer video information is obtained by means for combining said predicted enhancement layer information with the inverse quantized and inverse transformed enhancement layer information in all cases, and
for a third decoding mode the reconstructed enhancement layer video information is obtained without using said predicted enhancement layer information.

11. Apparatus according to claim 10 or 11, wherein the means for upsampling comprises means (RUp) for increasing the number of pixels and means (BDUp) for increasing the number of values that each pixel can have.

12. Encoded scalable video signal comprising encoded base layer data, encoded enhancement layer data and a prediction type indication, wherein the prediction type indication indicates whether the encoded enhancement layer data comprises a residual being the difference between a bit depth upsampled base layer image and an enhancement layer image, the residual comprising differential bit depth information, and further indicates whether said residual was obtained from intra coded base layer video only, or also from inter coded base layer video.
